(19) Europäisches Patentamt / European Patent Office / Office européen des brevets

(11) **EP 4 773 302 A1**

(12) **EUROPEAN PATENT APPLICATION**
published in accordance with Art. 153(4) EPC


(43) Date of publication:
**08.07.2026 Bulletin 2026/28**

(21) Application number: **24899319.8**

(22) Date of filing: **09.08.2024**

(51) International Patent Classification (IPC):
***H01M 10/0567*** *(2010.01)* ***H01M 10/0569*** *(2010.01)*
***H01M 10/058*** *(2010.01)* ***H01M 10/052*** *(2010.01)*

(52) Cooperative Patent Classification (CPC):
Y02E 60/10

(86) International application number:
**PCT/CN2024/110988**

(87) International publication number:
**WO 2025/118670 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.12.2023 CN 202311680333**



(71) Applicant: **Contemporary Amperex Technology Co., Limited**
**Ningde, Fujian 352100 (CN)**

(72) Inventors:
- **NIU, Congsu**
  **Ningde, Fujian 352100 (CN)**
- **LI, Xiaowei**
  **Ningde, Fujian 352100 (CN)**
- **PEI, Zhenxing**
  **Ningde, Fujian 352100 (CN)**
- **YANG, Limei**
  **Ningde, Fujian 352100 (CN)**

(74) Representative: **Ziebig Hengelhaupt Intellectual Property Attorneys Patentanwaltskanzlei PartGmbB**
**Leipziger Straße 49**
**10117 Berlin (DE)**


(54) **LITHIUM SECONDARY BATTERY, PREPARATION METHOD THEREFOR, AND ELECTRICAL APPARATUS**


(57) A lithium secondary battery, a preparation method therefor, and an electrical apparatus are provided. The lithium secondary battery includes an electrolyte solution, the electrolyte solution including a first solvent, a first additive, and a second additive, and the first solvent including a carboxylic ester compound. A reduction potential of the carboxylic ester compound relative to $Li^+/Li$ is less than or equal to 1.4 V, a reduction potential of the first additive relative to $Li^+/Li$ is greater than or equal to 1.4 V, and a reduction potential of the second additive relative to $Li^+/Li$ is greater than or equal to 1.0 V and less than 1.4 V. According to the lithium secondary battery, the stability and compactness of an SEI film are improved by means of improving an electrolyte solution, thereby reducing the degree of gas production during cycling and storage of the lithium secondary battery and comprehensively improving the performance of the lithium secondary battery.


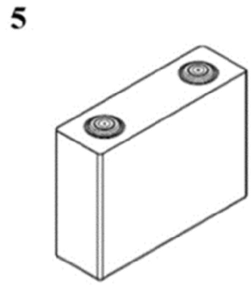


FIG. 1

EP 4 773 302 A1

## Description

CROSS REFERENCE

The present application claims the right of priority of Chinese Patent Application No. 202311680333.9 filed on December 08, 2023 and entitled "LITHIUM SECONDARY BATTERY, PREPARATION METHOD THEREFOR, AND ELECTRICAL APPARATUS", which is incorporated herein by reference in its entirety.

TECHNICAL FIELD

The present application relates to the technical field of lithium battery, in particular to a lithium secondary battery, preparation method therefore, and an electrical apparatus.

BACKGROUND

In recent years, as the application range of lithium ion batteries becomes wider, the lithium ion batteries are widely used in various fields such as energy storage power systems such as hydraulic power stations, thermal power stations, wind power stations, and solar power stations, as well as a plurality of fields such as power tools, electric bicycles, electric motorcycles, electric vehicles, military equipment, and aerospace. Due to great development of the lithium ion batteries, higher requirements are put forward for energy density, cycle performance, safety performance, and the like of the lithium ion batteries.

Enhancing the power performance, cycle life, and storage life of batteries has always been a pursuit goal in the industry. However, side reactions of the electrolyte solution at the anode-cathode interface lead to poor comprehensive performance of the battery cells.

SUMMARY

The present application is made in view of the above issues, with the objective of providing a lithium secondary battery and preparation method therefore aimed at improving the stability and compactness of a Solid electrolyte solution Interphase (SEI) film by means of improving an electrolyte solution, thereby reducing the degree of gas production during cycling and enhancing the storage performance and cycle performance of the lithium secondary battery, thus comprehensively improving the performance of the lithium secondary battery.

To achieve the above objective, a first aspect of the present application provides a lithium secondary battery, where the lithium secondary battery includes an electrolyte solution, the electrolyte solution including a first solvent, a first additive, and a second additive, and the first solvent including a carboxylic ester compound. A reduction potential of the carboxylic ester compound relative to $Li^+/Li$ is less than or equal to 1.4 V, a reduction potential of the first additive relative to $Li^+/Li$ is greater than or equal to 1.4 V, and a reduction potential of the second additive relative to $Li^+/Li$ is greater than or equal to 1.0 V and less than 1.4 V.

The carboxylic ester solvent can enhance the ionic conductivity of the electrolyte solution due to their low viscosity, thereby improving fast-charging performance of the battery. Controlling a reduction potential of the first additive relative to $Li^+/Li$ to be higher than that of the carboxylic ester solvent relative to $Li^+/Li$ facilitates the formation of the SEI film by the first additive prior to the carboxylic ester solvent, thereby reducing side reactions and gas production of the carboxylic ester solvent. Meanwhile, the introduction of the second additive competes with carboxylic ester solvents to form the SEI film; in addition, the SEI film formed by the second additive helps improve the overall compactness and stability of the SEI film, which further reduces the risk of carboxylic ester solvents penetrating through the SEI film and inducing side reactions, thereby enabling the battery to simultaneously enhance both its storage performance and cycle performance.

In any embodiment, the electrolyte solution further includes a third additive, where the electrolyte solution further includes a third additive, and a reduction potential of the third additive relative to $Li^+/Li$ is less than 1.0 V.

The third additive introduced into the electrolyte solution can participate in solvation, form a solvated structure, and suppress oxidative decomposition and gas production of the battery at high and room temperatures. In addition, some of the third additive will also continue to participate in film formation after the first additive and the second additive form a film, further enhancing the compactness and stability of the SEI film.

In any embodiment, the carboxylic ester compound includes a compound having a structure as shown in formula I,

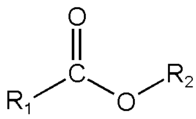

formula I,

where $R_1$ and $R_2$ each independently include at least one of a C1-C5 alkyl group and a C1-C5 haloalkyl group.

In any embodiment, the carboxylic ester compound includes at least one of ethyl acetate, methyl acetate, propyl acetate, and ethyl formate.

In any embodiment, the carboxylic ester compound includes at least one of ethyl acetate, methyl acetate, and propyl acetate.

When carboxylic ester compounds of the above types are used as solvents, they can reduce the viscosity of the electrolyte solution, increase its conductivity, and thereby enhance a fast-charging performance of the battery.

In any embodiment, the first additive includes at least one of a tetrafluoroborate compound, an oxalate borate compound, a borate ester compound, vinyl sulfite vinyl ester, 1,3-propene sultone, and methylene dimethanesulfonate.

In any embodiment, the first additive includes at least one of lithium difluorooxalate borate, lithium bis(oxalato) borate, tris(trimethylsilyl) borate, and 1,3-propene sultone.

The above-mentioned types of first additives can preferentially form the SEI film over carboxylic ester solvents. The resulting SEI film exhibits high conductivity and low charge transfer impedance, which can, to a certain extent, reduce the internal resistance of the battery, enhance the stability of the solvent with the anode, minimize side reactions of the carboxylic ester solvent, and comprehensively improve the performance of the lithium secondary battery.

In any embodiment, the second additive includes at least one of vinylene carbonate, fluoroethylene carbonate, vinyl ethylene carbonate, organic sulfate esters, sulfonate esters, and difluorophosphate.

In any embodiment, the second additive includes at least one of vinylene carbonate, fluoroethylene carbonate, and ethylene sulfate.

The above-mentioned types of second additives can compete with carboxylic ester solvents to form the SEI film, helps improve the overall compactness and stability of the SEI film, which further reduces the risk of carboxylic ester solvents penetrating through the SEI film and inducing side reactions, thereby enabling the battery to simultaneously enhance both its storage performance and cycle performance.

In any embodiment, the third additive includes at least one of an organophosphorus compound, an organofluorine compound, a phosphate ester compound, a borate ester compound, and a sulfonate compound.

In any embodiment, the third additive includes at least one of tris(2,2,2-trifluoroethyl) phosphite and tris(trimethylsilyl) phosphate.

The above-mentioned types of third additives can participate in solvation, form a solvated structure, and further suppress oxidative decomposition and gas production of the battery at high and room temperatures.

In any embodiment, the lithium secondary battery satisfies the following conditions: $0.003 \leq W1/W4 \leq 0.125$, where W4 is a mass content of the first solvent in the electrolyte solution, with a unit of %; and W1 is a mass content of the first additive in the electrolyte solution, with a unit of %.

In any embodiment, the lithium secondary battery satisfies the following conditions: $0.025 \leq W2/W4 \leq 0.5$, where W4 is a mass content of the first solvent in the electrolyte solution, with a unit of %; and W2 is a mass content of the second additive in the electrolyte solution, with a unit of %.

In any embodiment, the lithium secondary battery satisfies the following conditions: $0.3\ g/Ah \leq (D4 + D2)/A \leq 2.3\ g/Ah$, where D4 is the mass of the first solvent, with a unit of g; D2 is the mass of the second additive, with a unit of g; and A is a rated capacity of the lithium secondary battery, with a unit of Ah.

In any embodiment, the lithium secondary battery satisfies the following conditions: $0.5g/Ah \leq (D4 + D2)/A \leq 2g/Ah$, where D4 is the mass of the first solvent, with a unit of g; D2 is the mass of the second additive, with a unit of g; and A is a rated capacity of the lithium secondary battery, with a unit of Ah.

Compared with carboxylic ester solvents, the first additive has a higher reduction potential relative to $Li^+/Li$, and can form a film on an anode surface prior to the carboxylic ester solvents; a reduction potentials of the second additive and carboxylic ester solvents relative to $Li^+/Li$ are relatively close, and the second additive can compete with the carboxylic ester solvents to form the SEI film. Therefore, controlling the ratio of the contents of the two additives and carboxylic ester compounds in the electrolyte solution within a certain range can effectively reduce side reactions and gas production of the carboxylic ester solvents, while improving both the storage performance and cycle performance of the battery.

In any embodiment, the lithium secondary battery satisfies the following conditions: $0.016 \leq W1/(W1+W2+W3) \leq 0.455$, where W1 is a mass content of the first additive in the electrolyte solution, with a unit of %; W2 is a mass content of the second additive in the electrolyte solution, with a unit of %; and W3 is a mass content of the third additive in the electrolyte solution, with a unit of %.

In any embodiment, the lithium secondary battery satisfies the following conditions: $0.333 \leq W2/(W1 + W2 + W3) \leq 0.833$, where W1 is a mass content of the first additive in the electrolyte solution, with a unit of %; W2 is a mass content of

the second additive in the electrolyte solution, with a unit of %; and W3 is a mass content of the third additive in the electrolyte solution, with a unit of %.

Due to the relatively close reduction potential relative to $Li^+/Li$, there is a certain competitive reaction between the second additive and the carboxylic ester solvent in film formation. Controlling the content of the second additive to be relatively higher than that of the first additive and the third additive helps to enhance the effect of the second additive in competing with the carboxylic ester solvent for film formation. Therefore, controlling the ratio of the contents of the first additive, the second additive, and the third additive within a certain range can balance the storage performance of the lithium secondary battery and comprehensively improve battery performance.

In any embodiment, the lithium secondary battery satisfies the following conditions: $10\% \leq W4 \leq 70\%$, where W4 is a mass content of the first solvent in the electrolyte solution, with a unit of %.

In any embodiment, the lithium secondary battery satisfies the following conditions: $20\% \leq W4 \leq 50\%$, where W4 is a mass content of the first solvent in the electrolyte solution, with a unit of %.

The carboxylic ester compounds as solvents can enhance the conductivity of the electrolyte solution, thereby improving the fast-charging performance of the battery; however, an excessively high content of carboxylic ester solvents can cause oxidation decomposition and gas production, which will damage the performance of the battery. Therefore, controlling the content of carboxylic ester compounds in the electrolyte solution within an appropriate range can balance the formation of the SEI film and the ionic conductivity of the electrolyte solution, thereby improving the cycle performance of the lithium secondary battery and reducing the extent of gas production during storage.

In any embodiment, the lithium secondary battery satisfies the following conditions: $0.1\% \leq W1 \leq 5\%$, where W1 is a mass content of the first additive in the electrolyte solution, with a unit of %.

In any embodiment, the lithium secondary battery satisfies the following conditions: $0.5\% \leq W1 \leq 2\%$, where W1 is a mass content of the first additive in the electrolyte solution, with a unit of %.

In any embodiment, the lithium secondary battery satisfies the following conditions: $1\% \leq W2 \leq 10\%$, where W2 is a mass content of the second additive in the electrolyte solution, with a unit of %.

In any embodiment, the lithium secondary battery satisfies the following conditions: $4\% \leq W2 \leq 8\%$, where W2 is a mass content of the second additive in the electrolyte solution, with a unit of %.

In any embodiment, the lithium secondary battery satisfies the following conditions: $0.1\% \leq W3 \leq 5\%$, where W3 is a mass content of the third additive in the electrolyte solution, with a unit of %.

In any embodiment, the lithium secondary battery satisfies the following conditions: $0.5\% \leq W3 \leq 2\%$, where W3 is a mass content of the third additive in the electrolyte solution, with a unit of %.

Controlling the contents of the first additive, the second additive, and the third additive within a certain range can balance the storage performance of the lithium secondary battery and comprehensively improve battery performance.

In any embodiment, the electrolyte solution further includes a second solvent, which includes at least one of cyclic carbonate compounds and linear carbonate compounds; the cyclic carbonate compounds include at least one of ethylene carbonate, propylene carbonate, and butylene carbonate; the linear carbonate compounds include at least one of dimethyl carbonate, ethyl methyl carbonate, and diethyl carbonate.

Adding the above-mentioned carbonate compounds and linear carbonate compounds to the electrolyte solution can further enhance the stability of the electrolyte solution and improve its conductivity.

In any embodiment, based on a total mass of the electrolyte solution, a mass content of the second solvent is $\geq 30\%$.

In any embodiment, based on the total mass of the electrolyte solution, a mass content of the second solvent is 30% to 85%.

In any embodiment, the lithium secondary battery satisfies the following conditions: $14.2 mS/cm \leq S \leq 16.8 mS/cm$, where S is an ionic conductivity of the electrolyte solution at 25°C, with a unit of mS/cm.

The lithium secondary battery provided in the present application has an ionic conductivity within the above-mentioned range, thus exhibiting excellent fast-charging performance.

In any embodiment, the lithium secondary battery further includes a positive electrode sheet and a negative electrode sheet; the positive electrode sheet includes a positive electrode current collector and a positive electrode material layer located on at least one side of the positive electrode current collector, the positive electrode material layer includes a lithium-containing phosphate with an olivine structure, and the lithium-containing phosphate includes a compound represented by the general formula shown in formula II,

$$LiFe_{1-x-y}Mn_xM_yPO_4, \qquad \text{formula II,}$$

where $0 \leq x \leq 1$, $0 \leq y < 1$, and M includes at least one of V, Nb, Ti, Co, Ni, Sc, Ge, Mg, Al, Zr, Hf, Ta, Mo, W, Ru, Ag, Sn, and Pb.

In any embodiment, the compact density of the positive electrode sheet is from 2.4 $g/cm^3$ to 2.75 $g/cm^3$.

The compact density affects the wettability of the electrode sheet; therefore, controlling the compact density within a certain range can enable the battery to have better fast-charging performance, high-temperature expansion rate,

and cycle performance.

In any embodiment, the negative electrode sheet includes a negative electrode current collector and a negative electrode material layer located on at least one side of the negative electrode current collector, and the negative electrode material layer includes at least one of artificial graphite, natural graphite, soft carbon, hard carbon, mesophase microbead carbon, a silicon-based material, and a tin-based material, and optionally includes natural graphite.

In any embodiment, a compact density of the negative electrode sheet is from 1.5 g/$cm^3$ to 1.85 g/$cm^3$.

The compact density affects the wettability of the electrode sheet; therefore, controlling the compact density within a certain range can enable the battery to have better fast-charging performance, high-temperature expansion rate, and cycle performance.

In any embodiment, the porosity of the negative electrode sheet is from 20% to 50%.

The second aspect of the present application provides an electrical apparatus including the lithium secondary battery of the first aspect.

## BRIEF DESCRIPTION OF THE DRAWINGS

FIG. 1 is a schematic diagram of a secondary battery according to an implementation of the present application;
FIG. 2 is an exploded view of the secondary battery according to an implementation of the present application shown in FIG. 1; and
FIG. 3 is a schematic diagram of an electrical apparatus using a secondary battery as a power supply according to an embodiment of the present application.

Description of reference signs:
5-secondary battery; 51-housing; 52-electrode assembly; 53-cover plate.

## DETAILED DESCRIPTION OF PREFERRED EMBODIMENTS

Hereinafter, the embodiments of the lithium secondary battery, preparation method therefore, and the electrical apparatus of the present application are specifically disclosed with appropriate reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise specified, a numerical range "a-b" represents an abbreviated representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed.

For example, the "include/comprise" and "contain" may mean that other components not listed may be further included/comprised or contained, or only the listed components may be included/comprised or contained.

Unless otherwise specified, in the present application, the term "or" is inclusive. For example, the phrase "A or B" means "A, B, or both A and B". More specifically, the condition "A or B" is satisfied by any one of A being true (or present) and B being false (or absent), A being false (or absent) and B being true (or present), or both A and B being true (or present).

When carboxylic ester compounds are used as solvents, they can reduce the viscosity of the electrolyte solution, increase its conductivity, and thereby enhance a fast-charging performance of the battery. However, carboxylic ester electrolyte solutions are incompatible with anode graphite and have already undergone side reactions with graphite to produce gas; moreover, carboxylic ester solvent molecules have a smaller structure and can easily penetrate the SEI film to further induce side reactions, thereby deteriorating battery performance. Therefore, higher requirements are imposed on the stability and compactness of the SEI film.

[Electrolyte solution]

To achieve the above objective, the present application provides a lithium secondary battery, where the lithium secondary battery includes an electrolyte solution, the electrolyte solution including a first solvent, a first additive, and a second additive, and the first solvent including a carboxylic ester compound. A reduction potential of the carboxylic ester compound relative to Li+/Li is less than or equal to 1.4 V, a reduction potential of the first additive relative to Li+/Li is greater than or equal to 1.4 V, and a reduction potential of the second additive relative to Li+/Li is greater than or equal to 1.0 V and less than 1.4 V.

In this application, "reduction potential" and "reduction potential relative to $Li^+/Li$" refer to a redox potential of the solvent or additive itself relative to $Li^+/Li$, while "reaction potential" and "film-forming reaction potential in full cell" refer to the potential at which film formation begins during the formation stage in a full cell with a graphite anode. Reaction potential = 3.4 V-reduction potential relative to $Li^+/Li$.

The carboxylic ester solvent can enhance the ionic conductivity of the electrolyte solution due to their low viscosity, thereby improving fast-charging performance of the battery. However, if carboxylic ester solvents participate excessively in film formation, the resulting SEI film will be less effective, leading to significant gas production during cycling and storage, which reduces the battery's lifespan. Therefore, adding additives with high reduction potentials to the electrolyte solution can inhibit excessive reactions between carboxylic ester solvents and graphite during film formation, reduce gas production during the cycling and storage of the battery, and thereby enhance the storage performance and cycle performance of the lithium secondary battery, thus comprehensively improving the performance of the lithium secondary battery.

The first additive has a higher reduction potential relative to $Li^+/Li$ than carboxylic ester solvents and can form the SEI film preferentially over them. The SEI film resulted from the first additive exhibits high conductivity and low charge transfer impedance, which can, to a certain extent, reduce the internal resistance of the battery, enhance the stability of the solvent with the anode, minimize side reactions of the carboxylic ester solvent, and comprehensively improve the performance of the lithium secondary battery.

Meanwhile, the main function of introducing the second additive is that, after the first additive forms a film, it competes with carboxylate-based solvents to form the SEI film, continuously enhances the compactness and thickness of the formed film, further strengthens the stability between the solvent and the anode, and helps to improve the overall compactness and stability of the SEI film, which further reduces the risk of carboxylic ester solvents penetrating through the SEI film and inducing side reactions, thereby enabling the battery to simultaneously enhance both its storage performance and cycle performance.

In some embodiments, the electrolyte solution further includes a third additive, where the electrolyte solution further includes a third additive, and a reduction potential of the third additive relative to $Li^+/Li$ is less than 1.0 V.

The third additive introduced into the electrolyte solution can participate in solvation, form a solvated structure, and suppress oxidative decomposition and gas production of the battery at high and room temperatures. In addition, some of the third additive will also continue to participate in film formation after the first additive and the second additive form a film, further enhancing the compactness and stability of the SEI film.

In some embodiments, the carboxylic ester compound includes a compound having a structure as shown in formula I,

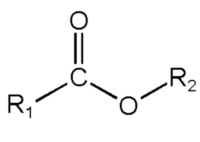 formula I,

where $R_1$ and $R_2$ each independently include at least one of a C1-C5 alkyl group and a C1-C5 haloalkyl group. In some

embodiments, $R_1$ and $R_2$ are each independently selected from a C1-C5 alkyl group or a C1-C5 haloalkyl group.

In this application, the term "C1-CS alkyl group" refers to a straight-chain or branched hydrocarbon chain group composed solely of carbon and hydrogen atoms, with no unsaturated bonds, containing from one to five carbon atoms, and connected to the rest of the molecule via a single bond. Exemplary C1-C5 alkyl groups include methyl, ethyl, and propyl.

"Haloalkyl group" refers to an alkyl group substituted with a halogen, where halogen refers to Group VIIA elements in the periodic table, including fluorine, chlorine, bromine, and iodine.

In some embodiments, the carboxylic ester compound includes at least one of ethyl acetate, methyl acetate, propyl acetate, and ethyl formate.

In some embodiments, the carboxylic ester compound includes at least one of ethyl acetate, methyl acetate, and propyl acetate.

When carboxylic ester compounds of the above types are used as solvents, they can reduce the viscosity of the electrolyte solution, increase its conductivity, and thereby enhance a fast-charging performance of the battery.

In some embodiments, the first additive includes at least one of a tetrafluoroborate compound, an oxalate borate compound, a borate ester compound, vinyl sulfite vinyl ester, 1,3-propene sultone, and methylene dimethanesulfonate.

In some embodiments, the first additive includes at least one of lithium difluorooxalate borate, lithium bis(oxalato) borate, tris(trimethylsilyl) borate, and 1,3-propene sultone.

The above-mentioned types of first additives can preferentially participate in forming the SEI film over carboxylic ester solvents. The resulting SEI film exhibits high conductivity and low charge transfer impedance, which can, to a certain extent, reduce the internal resistance of the battery, enhance the stability of the solvent with the anode, minimize side reactions of the carboxylic ester solvent, and comprehensively improve the performance of the lithium secondary battery.

In some embodiments, the second additive includes at least one of vinylene carbonate, fluoroethylene carbonate, vinyl ethylene carbonate, organic sulfate esters, sulfonate esters, and difluorophosphate.

In some embodiments, the second additive includes at least one of vinylene carbonate, fluoroethylene carbonate, and ethylene sulfate.

The above-mentioned types of second additives can compete with carboxylic ester solvents to form the SEI film, helps improve the overall compactness and stability of the SEI film, which further reduces the risk of carboxylic ester solvents penetrating through the SEI film and inducing side reactions, thereby enabling the battery to simultaneously enhance both its storage performance and cycle performance.

In some embodiments, the third additive includes at least one of an organophosphorus compound, an organofluorine compound, a phosphate ester compound, a borate ester compound, and a sulfonate compound.

In some embodiments, the third additive includes at least one of tris(2,2,2-trifluoroethyl) phosphite and tris(trimethylsilyl) phosphate.

The above-mentioned types of third additives can participate in solvation, form a solvated structure, and further suppress oxidative decomposition and gas production of the battery at high and room temperatures.

In some embodiments, the lithium secondary battery satisfies the following conditions: $0.003 \le W1/W4 \le 0.125$. In some embodiments, the ratio of W1/W4 is 0.005, 0.01, 0.02, 0.025, 0.05, 0.1, and 0.125, or any range or value between any two of the foregoing. Where W4 is a mass content of the first solvent in the electrolyte solution, with a unit of %; and W1 is a mass content of the first additive in the electrolyte solution, with a unit of %.

In some embodiments, the lithium secondary battery satisfies the following conditions: $0.025 \le W2/W4 \le 0.5$. In some embodiments, the ratio of W2/W4 is 0.025, 0.07, 0.1, 0.125, 0.2, 0.25, 0.3, 0.4, and 0.5, or any range or value between any two of the foregoing. Where W4 is a mass content of the first solvent in the electrolyte solution, with a unit of %; and W2 is a mass content of the second additive in the electrolyte solution, with a unit of %.

In some embodiments, the lithium secondary battery satisfies the following conditions: $0.3\ g/Ah \le (D4+D2)/A \le 2.3\ g/Ah$. In some embodiments, the ratio of (D4+D2)/A is 0.3, 0.5, 0.8, 1.0, 1.5, 1.8, 2.0, 2.2, and 2.3, or any range or value between any two of the foregoing. where D4 is the mass of the first solvent, with a unit of g; D2 is the mass of the second additive, with a unit of g; and A is a rated capacity of the lithium secondary battery, with a unit of Ah.

In some embodiments, the lithium secondary battery satisfies the following conditions: $0.5g/Ah \le (D4 + D2)/A \le 2g/Ah$, where D4 is the mass of the first solvent, with a unit of g; D2 is the mass of the second additive, with a unit of g; and A is a rated capacity of the lithium secondary battery, with a unit of Ah.

In this application, "rated capacity" refers to the amount of electricity discharged by the battery under certain conditions (discharge rate, temperature, termination voltage, etc.), that is, the capacity of the battery, usually with a unit of ampere-hours. The measurement method is as follows: at 25°C, first a fresh battery is discharged at a constant current of 0.33 C to 2.0 V, left standing for 30 minutes, then charged at a constant current of 0.33 C to 3.8 V, charged at a constant voltage of 0.05 C to 3.8 V, left standing for 30 minutes, discharged at a constant current of 0.33 C to 2.0 V, and recorded the discharge capacity at this time as the rated capacity of the battery.

Compared with carboxylic ester solvents, the first additive has a higher reduction potential relative to $Li^+/Li$, and can form a film on an anode surface prior to the carboxylic ester solvents; a reduction potentials of the second additive and carboxylic ester solvents relative to $Li^+/Li$ are relatively close, and the second additive can compete with the carboxylic

ester solvents to form the SEI film. Therefore, controlling the ratio of the contents of the two additives and carboxylic ester compounds in the electrolyte solution within a certain range can effectively reduce side reactions and gas production of the carboxylic ester solvents, while improving both the storage performance and cycle performance of the battery.

In some embodiments, the lithium secondary battery satisfies the following conditions: $0.016 \leq W1/(W1+W2+W3) \leq 0.455$. In some embodiments, the ratio of W1/(W1+W2+W3) is 0.016, 0.07, 0.09, 0.1, 0.2, 0.25, 0.3, 0.35, 0.4, and 0.45, or any range or value between any two of the foregoing. Where W1 is a mass content of the first additive in the electrolyte solution, with a unit of %; W2 is a mass content of the second additive in the electrolyte solution, with a unit of %; and W3 is a mass content of the third additive in the electrolyte solution, with a unit of %.

In some embodiments, the lithium secondary battery satisfies the following conditions: $0.333 \leq W2/(W1+W2+W3) \leq 0.833$. In some embodiments, the ratio of W2/(W1+W2+W3) is 0.333, 0.4, 0.45, 0.5, 0.55, 0.6, 0.65, 0.7, 0.75, and 0.8, or any range or value between any two of the foregoing. Where W1 is a mass content of the first additive in the electrolyte solution, with a unit of %; W2 is a mass content of the second additive in the electrolyte solution, with a unit of %; and W3 is a mass content of the third additive in the electrolyte solution, with a unit of %.

Compared with the carboxylic ester solvent, the first additive has a higher reduction potential relative to $Li^+/Li$, and can form a film on the anode surface prior to the carboxylic ester solvent. The resulting SEI film has advantages such as high conductivity and low charge transfer impedance. A reduction potential of the second additive relative to $Li^+/Li$ is relatively close to that of the carboxylic ester solvent, so it can compete with the carboxylic ester solvent to form the SEI film. The resulting SEI film has advantages such as good stability and high strength, and can also stabilize the cycle performance. Precisely due to the relatively close reduction potential relative to $Li^+/Li$, there is a certain competitive reaction between the second additive and the carboxylic ester solvent in film formation, controlling the content of the second additive to be relatively higher than that of the first additive and the third additive guarantees to enhance the effect of the second additive in competing with the carboxylic ester solvent for film formation. Therefore, controlling the ratio of the contents of the first additive, the second additive, and the third additive within a certain range can balance the storage performance of the lithium secondary battery and comprehensively improve battery performance.

In some embodiments, the lithium secondary battery satisfies the following conditions: $10\% \leq W4 \leq 70\%$, where W4 is a mass content of the first solvent in the electrolyte solution, with a unit of %. In some embodiments, W4 is 10%, 20%, 40%, 50%, 70%, or any range or numerical value between any two of the foregoing.

In some embodiments, the lithium secondary battery satisfies the following conditions: $20\% \leq W4 \leq 50\%$, where W4 is a mass content of the first solvent in the electrolyte solution, with a unit of %.

When the carboxylic ester compounds are used as solvents, the conductivity of the electrolyte solution can be enhanced, thereby improving the fast-charging performance of the battery; however, an excessively high content of carboxylic ester solvents can cause oxidation decomposition and gas production, which will damage the performance of the battery. Therefore, controlling the content of carboxylic ester compounds in the electrolyte solution within an appropriate range can balance the formation of the SEI film and the ionic conductivity of the electrolyte solution, thereby improving the cycle performance of the lithium secondary battery and reducing the extent of gas production during storage.

In some embodiments, the lithium secondary battery satisfies the following conditions: $0.1\% \leq W1 \leq 5\%$, where W1 is a mass content of the first additive in the electrolyte solution, with a unit of %. In some embodiments, W1 is 0.5%, 1%, 2%, 5%, or a range or value between any two of the foregoing values.

In some embodiments, the lithium secondary battery satisfies the following conditions: $0.5\% \leq W1 \leq 2\%$, where W1 is a mass content of the first additive in the electrolyte solution, with a unit of %.

In some embodiments, the lithium secondary battery satisfies the following conditions: $1\% \leq W2 \leq 10\%$, where W2 is a mass content of the second additive in the electrolyte solution, with a unit of %. In some embodiments, W2 is 1%, 4%, 5%, 8%, 10%, or any range or numerical value between any two of the foregoing.

In some embodiments, the lithium secondary battery satisfies the following conditions: $4\% \leq W2 \leq 8\%$, where W2 is a mass content of the second additive in the electrolyte solution, with a unit of %.

In some embodiments, the lithium secondary battery satisfies the following conditions: $0.1\% \leq W3 \leq 5\%$, where W3 is a mass content of the third additive in the electrolyte solution, with a unit of %. In some embodiments, W3 is 0.1%, 0.5%, 2%, 5%, or any range or numerical value between any two of the foregoing.

In some embodiments, the lithium secondary battery satisfies the following conditions: $0.5\% \leq W3 \leq 2\%$, where W3 is a mass content of the third additive in the electrolyte solution, with a unit of %.

Controlling the contents of the first additive, the second additive, and the third additive within a certain range can balance the storage performance of the lithium secondary battery and comprehensively improve battery performance.

In some embodiments, the electrolyte solution further includes a second solvent, which includes at least one of cyclic carbonate compounds and linear carbonate compounds; the cyclic carbonate compounds include at least one of ethylene carbonate, propylene carbonate, and butylene carbonate; the linear carbonate compounds include at least one of dimethyl carbonate, ethyl methyl carbonate, and diethyl carbonate.

In some embodiments, based on a total mass of the electrolyte solution, a mass content of the second solvent is $\geq 30\%$.

In some embodiments, based on the total mass of the electrolyte solution, a mass content of the second solvent is 30% to 85%. In some embodiments, based on the total mass of the electrolyte solution, a mass content of the second solvent is 35%, 40%, 45%, 50%, 55%, 60%, 65%, 70%, 75%, 80%, and 85%, or any range or numerical value within the foregoing ranges between any two of the foregoing.

In some embodiments, the lithium secondary battery satisfies the following conditions: 14.2 mS/cm $\leq$ S $\leq$ 16.8 mS/cm. In some embodiments, S is 14.5 mS, 15 mS, 15.5 mS, 16 mS, 16.5 mS, and, 16.8 mS, or any range or numerical value within the foregoing ranges between any two of the foregoing. Where S is an ionic conductivity of the electrolyte solution at 25°C, with a unit of mS/cm.

In this application, "ionic conductivity" refers to the conductivity of the electrolyte solution for ions, reflecting its ability to conduct ions.

The lithium secondary battery provided in the present application has an ionic conductivity within the above-mentioned range, thus exhibiting excellent fast-charging performance.

The present application also provides a method for preparing a lithium secondary battery.

Generally, a secondary battery includes a positive electrode sheet, a negative electrode sheet, an electrolyte solution and a separator. During charge and discharge of the battery, active ions are intercalated and deintercalated back and forth between the positive electrode sheet and the negative electrode sheet. The electrolyte solution functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

In some embodiments, the lithium secondary battery further includes a positive electrode sheet and a negative electrode sheet.

[Positive electrode sheet]

The positive electrode sheet includes a positive electrode current collector and a positive electrode material layer located on at least one side of the positive electrode current collector.

As an example, the positive electrode current collector has two surfaces opposed in its own thickness direction, and the positive electrode material layer is provided on either one or both of the two opposed surfaces of the positive electrode current collector.

Where the positive electrode sheet includes a positive electrode current collector and a positive electrode material layer located on at least one side of the positive electrode current collector, the positive electrode material layer includes a lithium-containing phosphate with an olivine structure, and the lithium-containing phosphate includes a compound represented by the general formula shown in formula II,

$$LiFe_{1-x-y}Mn_xM_yPO_4, \qquad \text{formula II,}$$

where $0 \leq x \leq 1$, $0 \leq y < 1$, and M includes at least one of V, Nb, Ti, Co, Ni, Sc, Ge, Mg, Al, Zr, Hf, Ta, Mo, W, Ru, Ag, Sn, and Pb.

In some embodiments, the compact density of the positive electrode sheet is from 2.4 g/cm$^3$ to 2.75 g/cm$^3$.

In this application, "compact density" refers to: compact density = areal density/(thickness of the electrode sheet after rolling-thickness of the current collector). The test method for areal density is as follows: an electrode sheet with an area of 2×2 mm is taken, the electrode sheet is weighed to obtain its weight m1; the weight m2 of the substrate with an area of 2.2 mm is calculated according to the area, thickness and density of the electrode sheet substrate; and the areal density A is calculated as (m1-m2)/4. Then, a micrometer is used to measure the thickness d1 of the electrode sheet and the thickness d2 of the current collector, and the compact density is calculated as A/(d1-d2) based on the areal density.

The compact density affects the wettability of the electrode sheet; therefore, controlling the compact density within a certain range can enable the battery to have better fast-charging performance, high-temperature expansion rate, and cycle performance.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, the positive electrode material layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode material layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive electrode sheet may be prepared by dispersing the above components for preparing a positive electrode sheet, for example, a positive electrode material layer, a conductive agent, a binder, and any other components in a solvent (for example, N-methylpyrrolidone) to form a positive electrode slurry, and applying the positive electrode slurry to a positive electrode current collector, followed by drying, cold pressing, and the like.

[Negative electrode sheet]

The negative electrode sheet includes a negative electrode current collector and a negative electrode material layer located on at least one side of the negative electrode current collector.

As an example, the negative electrode current collector has two surfaces opposite in its own thickness direction, and the negative electrode material layer is provided on either one or both of the two opposite surfaces of the negative electrode current collector.

In some embodiments, the negative electrode sheet includes a negative electrode current collector and a negative electrode material layer located on at least one side of the negative electrode current collector, and the negative electrode material layer includes at least one of artificial graphite, natural graphite, soft carbon, hard carbon, mesophase microbead carbon, a silicon-based material, and a tin-based material, and optionally includes natural graphite.

In some embodiments, in a lithium secondary battery using natural graphite as the negative active electrode material, the film-forming reaction potential in full cell of the first solvent is greater than or equal to 2.1 V, the film-forming reaction potential in full cell of the first additive is less than or equal to 2.0 V, the film-forming reaction potential in full cell of the second additive is greater than 2.0 V and less than 2.4 V, and the film-forming reaction potential in full cell of the third additive is greater than or equal to 2.4 V.

In some embodiments, a compact density of the negative electrode sheet is from 1.5 $g/cm^3$ to 1.85 $g/cm^3$.

The compact density affects the wettability of the electrode sheet; therefore, controlling the compact density within a certain range can enable the battery to have better fast-charging performance, high-temperature expansion rate, and cycle performance.

In some embodiments, the porosity of the negative electrode sheet is from 20% to 50%.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, the negative electrode material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some embodiments, the negative electrode material layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode material layer further optionally includes other auxiliaries, for example, a thickener (such as sodium carboxymethyl cellulose (CMC-Na)).

In some embodiments, the negative electrode sheet may be prepared in the following manner: the above-mentioned components for preparing the negative electrode sheet are dispersed, for example, the negative electrode material layer, the conductive agent, the binder, and any other component in a solvent (e.g., deionized water) to form a negative electrode slurry; and the negative electrode slurry is coated on the negative electrode current collector, and performed procedures such as drying and cold pressing, to obtain the negative electrode sheet.

[Separator]

In some embodiments, the secondary battery further includes a separator. The type of the separator is not particularly limited in the present application, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film,

materials of each layer may be the same or different, which is not particularly limited.

In some embodiments, the positive electrode sheet, the negative electrode sheet, and the separator may be manufactured into the electrode assembly through a winding process or a lamination process.

[Secondary Battery]

In some embodiments, the secondary battery may include an outer package. The outer package may be used to package the foregoing electrode assembly and electrolyte.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

The shape of the secondary battery is not limited in this application, and may be a cylindrical shape, a square shape, or any other shape. For example, FIG. 1 shows a secondary battery 5 of a square structure as an example.

In some embodiments, referring to FIG. 2, the outer package may include a housing 51 and a cover plate 53. The housing 51 may include a bottom plate and side plates connected to the bottom plate, and the bottom plate and the side plates define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the secondary battery 5, and the number may be selected by those skilled in the art according to specific practical requirements.

[Electrical apparatus]

In addition, the present application further provides an electrical apparatus including the lithium secondary battery provided in the present application. The secondary battery, the battery module, or the battery pack may be used as a power source of the electrical apparatus and may also be used as an energy storage unit of the electrical apparatus. The electrical apparatus may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery, the battery module, or the battery pack may be selected according to use requirements of the electrical apparatus.

FIG. 3 shows an electrical apparatus as an example. The electrical apparatus is a pure electric vehicle, a hybrid electric vehicle, a plug-in hybrid electric vehicle, or the like. In order to meet the demand for high power and high energy density of the secondary battery by the electrical apparatus, a battery pack or a battery module may be used.

In another example, the electrical apparatus may be a cell phone, a tablet computer, a notebook computer, or the like. This electrical apparatus is generally required to be thin and lightweight, and may use a secondary battery as a power supply.

## Examples

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

## I. Preparation Method

Example 1

1) Electrolyte solution

In an argon atmosphere glovebox ($H_2O$ content < 10 ppm, $O_2$ content < 1 ppm), the first solvent vinylene carbonate and the second solvents ethylene carbonate (EC) and ethyl methyl carbonate (EMC) (with a mass ratio of EC to

EMC of 1:1) were mixed, and 15 wt% of lithium hexafluorophosphate ($LiPF_6$) was added, the mixture was thoroughly stirred until completely dissolved, after returning to room temperature, the first additive lithium difluorooxalate borate, the second additive vinylene carbonate, and the third additive tris(trimethylsilyl) phosphate were added and stirred evenly to prepare the electrolyte solution. Based on the total mass of the electrolyte solution, the mass content W4 of the first solvent is 40%, the mass content W1 of the first additive lithium difluorooxalate borate is 1%, the mass content W2 of the second additive vinylene carbonate is 5%, and the mass content W3 of the third additive tris(trimethylsilyl) phosphate is 1%.

(2) Preparation of a positive electrode sheet

The positive active electrode material lithium iron phosphate ($LiFePO_4$), the conductive agent acetylene black, and the binder polyvinylidene fluoride (PVDF) were thoroughly mixed in a weight ratio of 97:1:2 in an N-methylpyrrolidone solvent system to obtain a positive electrode slurry with a solid content of 66%, the positive electrode slurry was uniformly coated onto an aluminum foil positive electrode current collector, and after drying and cold pressing, the positive electrode sheet was obtained. The single-sided coating weight of the positive electrode sheet is 420 mg/1540.25 $mm^2$, and the compact density is 2.55 $g/cm^3$.

(3) Preparation of a negative electrode sheet

The negative active electrode material graphite, the conductive agent acetylene black, the thickener sodium carboxymethyl cellulose (CMC-Na), and the binder styrene-butadiene rubber (SBR) were mixed in a mass ratio of 96:1:1:2 in deionized water to prepare a negative electrode slurry with a solid content of 53%. The negative electrode slurry was coated onto a current collector copper foil, dried, and cold pressed to obtain the negative electrode sheet. The single-sided coating weight of the negative electrode sheet is 190 mg/1540.25 $mm^2$, the compact density is 1.6 $g/cm^3$, and the porosity is 30%.

(4) Separator

A polyethylene (PE) film coated with a nano alumina coating was used as the separator.

(5) Preparation of a battery

The positive electrode sheet, the separator, and the negative electrode sheet were stacked in sequence and wound to obtain a wound electrode assembly; the electrode assembly was placed into a square aluminum outer package, dried, and then electrolyte solution was injected, the mixture was sealed, left standing, formed, aged, secondarily sealed, capacity measured to obtain a lithium secondary battery. The electrolyte solution retention coefficient of the lithium secondary battery is 3.0 g/Ah.

The preparation methods of the secondary batteries in Examples 2 to 23 and Comparative Examples 1 to 4 are similar to the preparation method of the secondary battery in Example 1, but the mass contents and material types of the first solvent, the first additive, the second additive, and the third additive in the lithium secondary battery are adjusted. The different preparation parameters are detailed in Tables 1 and 2.

**II. Performance Test**

1. Test of potentials

1) Test method for a reduction potential relative to $Li^+/Li$ of the first solvent, the first additive, the second additive, and the third additive.

The electrolyte solution was placed in a clean 500 ml wide-mouth bottle, sealed with a rubber stopper, and different electrodes were inserted into the electrolyte solution, and led out from above the rubber stopper. A platinum electrode was used as the indicating electrode and connected to a positive terminal of a cyclic voltammetry testing device, a saturated calomel electrode was used as a reference electrode and connected to a negative terminal of the cyclic voltammetry testing device. The cyclic voltammetry testing device was turned on to scan for 3 cycles within a range of -3 V to 3 V at a speed of 0.5 mV/s. After the scanning had been completed, a reduction potential of the solvent and additive relative to $Li^+/Li$ was determined based on the voltage corresponding to a reduction peak position in a cyclic voltammogram obtained from the test.

2) Test method for film-forming reaction potential in full cell of the first solvent, the first additive, the second additive, and the third additive

Film-forming reaction potential in full cell = 3.4 V-reduction potential relative to $Li^+/Li$.

2. Electrolyte solution

1) Electrolyte solution retention coefficient

Electrolyte solution retention coefficient = total weight of electrolyte solution in the battery/nominal capacity of the battery.

2) Ionic conductivity

Approximately 100 mL of electrolyte solution sample was taken in a dry, clean, corrosion-resistant sample bottle, sealed, and placed in a constant-temperature water bath, the sample was shaken occasionally and preserved at a constant temperature of 25°C (with a deviation of ±0.5°C). After the sample temperature had been constant, its conductivity was tested using a commercially available conductivity meter, the conductivity meter was wiped clean with a calibration solution, vertically inserted into the sample liquid, clicked to start the test, and the test results were recorded after the data had been stabilized for more than 10 seconds.

3) Performance parameters of the SEI film

There is no clear method to measure the properties of the SEI film, but the quality of the SEI film can be indirectly reflected by the gas production during battery storage. This is because gas production during battery storage is mainly due to the reaction between the solvent and the anode. Therefore, the better the strength and compactness of the SEI film, the lower the gas production during battery storage.

Test method for gas production during storage at 60°C: at 25°C, the lithium secondary battery was charged at a constant current rate of 1 C to 3.8 V, and then charged at a constant voltage of 0.05 C, this state was marked as fully charged and the volume V0 of the battery was measured at this time. Then, the fully charged battery was placed in a 60°C constant-temperature oven, charged at a constant current rate of 1 C to 3.8 V, and then charged at a constant voltage of 0.05 C. After standing for 30 minutes, it was discharged at a constant current rate of 1 C to 2.8 V. After 300 cycles, the battery was charged at a constant current rate of 1 C to 3.8 V and then charged at a constant voltage of 0.05 C at 25°C. This state was marked as fully charged and the battery volume V1 was measured at this time. The value of V1-V0 was used to characterize the film-forming quality of the SEI film.

3. Battery

(1) Cycle performance

The lithium secondary battery was charged at a constant current of 1C to 3.8 V at 60°C, then was charged at a constant voltage of 0.05 C, followed by a 30-minute rest period. Subsequently, it was discharged at a constant current of 1 C to 2.8 V, and the discharge capacity was recorded as C0. The above charge-discharge cycle was repeated and the cycle number was recorded when the fading reached 80% SOH. The battery's discharge capacity was Cn. The cycle capacity retention rate of the battery was C1/Cn × 100%.

2) Storage performance

The lithium secondary battery was charged at a constant current of 0.33 C to 3.8 V at 25°C, then was charged at a constant voltage of 0.05 C, followed by a 30-minute rest period. Subsequently, it was discharged at a constant current of 0.33 C to 2.0 V, and the discharge capacity was recorded as D0. Then, the lithium secondary battery was stored at 60°C for 90 days. After that, the lithium secondary battery was taken out and allowed to return to 25°C. It was discharged at a constant current of 0.33 C to 2.0 V, rested for 30 minutes, charged at a constant current of 0.33 C to 3.8V, then was charged at a constant voltage of 0.05 C, rested for 30 minutes, and was discharged at a constant current of 0.33 C to 2.0 V. The discharge capacity was recorded as D1. Discharge capacity retention rate = D1/D0 × 100%.

3) Low-temperature capacity retention rate

It was rested for 2 hours at 25°C, the lithium secondary battery was charged at a constant current of 0.33 C to 3.8 V, then was charged at a constant voltage of 0.05 C, followed by a 2-hour rest period. Subsequently, it was discharged at a constant current of 1 C to 2.0 V, and the discharge capacity was recorded as E0. It was rested for 2 hours at 25°C, the lithium secondary battery was charged at a constant current of 0.33 C to 3.8 V, then was charged at a constant voltage of 0.05 C, followed by a 2-hour rest period at -20°C. Subsequently, it was discharged at a constant current of 1 C to 2.0 V, and the discharge capacity was recorded as E1. The capacity retention rate of the battery at -20°C was E1/E0 × 100%.

**III. Analysis of test results of Examples and Comparative examples**

The batteries in Examples and Comparative examples were each prepared according to the above method, and the parameters were measured. The results are shown in Table 3 below.

Table 1 Preparation parameters

| No. | Electrolyte solution | | | | | |
|---|---|---|---|---|---|---|
| | First additive | | Second additive | | Third additive | |
| | Substance | Mass content W1/% | Substance | Mass content W2/% | Substance | Mass content W3/% |
| Example 1 | Lithium difluor-ooxalate borate | 1 | Vinylene carbo-nate | 5 | Tris(trimethylsilyl) phosphate | 1 |
| Example 2 | Lithium difluor-ooxalate borate | 1 | Vinylene carbo-nate | 5 | Tris(trimethylsilyl) phosphate | 1 |
| Example 3 | Lithium difluor-ooxalate borate | 1 | Vinylene carbo-nate | 5 | Tris(trimethylsilyl) phosphate | 1 |
| Example 4 | Lithium difluor-ooxalate borate | 1 | Vinylene carbo-nate | 5 | Tris(trimethylsilyl) phosphate | 1 |
| Example 5 | Lithium difluor-ooxalate borate | 1 | Vinylene carbo-nate | 5 | Tris(trimethylsilyl) phosphate | 1 |
| Example 6 | Lithium difluorooxalate borate | 0.1 | Vinylene carbonate | 5 | Tris(trimethylsilyl) phosphate | 1 |
| Example 7 | Lithium difluorooxalate borate | 0.5 | Vinylene carbonate | 5 | Tris(trimethylsilyl) phosphate | 1 |
| Example 8 | Lithium difluor-ooxalate borate | 2 | Vinylene carbo-nate | 5 | Tris(trimethylsilyl) phosphate | 1 |
| Example 9 | Lithium difluor-ooxalate borate | 5 | Vinylene carbo-nate | 5 | Tris(trimethylsilyl) phosphate | 1 |
| Example 10 | Lithium difluor-ooxalate borate | 1 | Vinylene carbo-nate | 1 | Tris(trimethylsilyl) phosphate | 1 |
| Example 11 | Lithium difluor-ooxalate borate | 1 | Vinylene carbo-nate | 4 | Tris(trimethylsilyl) phosphate | 1 |
| Example 12 | Lithium difluor-ooxalate borate | 1 | Vinylene carbo-nate | 8 | Tris(trimethylsilyl) phosphate | 1 |
| Example 13 | Lithium difluor-ooxalate borate | 1 | Vinylene carbo-nate | 10 | Tris(trimethylsilyl) phosphate | 1 |
| Example 14 | Lithium difluor-ooxalate borate | 1 | Vinylene carbo-nate | 5 | Tris(trimethylsilyl) phosphate | 0.1 |
| Example 15 | Lithium difluor-ooxalate borate | 1 | Vinylene carbo-nate | 5 | Tris(trimethylsilyl) phosphate | 0.5 |

(continued)

| No. | Electrolyte solution | | | | | |
|---|---|---|---|---|---|---|
| | First additive | | Second additive | | Third additive | |
| | Substance | Mass content W1/% | Substance | Mass content W2/% | Substance | Mass content W3/% |
| Example 16 | Lithium difluor-ooxalate borate | 1 | Vinylene carbo-nate | 5 | Tris(trimethylsilyl) phosphate | 2 |
| Example 17 | Lithium difluor-ooxalate borate | 1 | Vinylene carbo-nate | 5 | Tris(trimethylsilyl) phosphate | 5 |
| Example 18 | Lithium difluor-ooxalate borate | 1 | Vinylene carbo-nate | 5 | Tris(trimethylsilyl) phosphate | 1 |
| Example 19 | Lithium difluor-ooxalate borate | 1 | Vinylene carbo-nate | 5 | Tris(trimethylsilyl) phosphate | 1 |
| Example 20 | Lithium bis(oxa-lato)borate | 1 | Vinylene carbo-nate | 5 | Tris(trimethylsilyl) phosphate | 1 |
| Example 21 | Lithium difluorooxalate borate | 1 | Fluoroethylene carbonate | 5 | Tris(trimethylsilyl) phosphate | 1 |
| Example 22 | Lithium difluorooxalate borate | 1 | Ethylene sulfate | 5 | Tris(trimethylsilyl) phosphate | 1 |
| Example 23 | Lithium difluor-ooxalate borate | 1 | Vinylene carbo-nate | 5 | Tris(2,2,2-trifluoroethyl) phosphite | 1 |
| Comparative Example 1 | / | / | / | / | / | / |
| Comparative Example 2 | / | / | Vinylene carbonate | 5 | / | / |
| Comparative Example 3 | Lithium difluorooxalate borate | 1 | / | / | / | / |
| Comparative Example 4 | / | / | / | / | Tris(trimethylsilyl) phosphate | 1 |

Table 2 Preparation parameters

| No. | Electrolyte solution | | | | | |
|---|---|---|---|---|---|---|
| | First solvent | | W1/W4 | W2/W4 | W1/(W1+W2+W3) | W2/(W1+W2+W3) |
| | Substance | Mass content W4/% | | | | |
| Example 1 | Ethyl acetate | 40 | 0.025 | 0.125 | 0.143 | 0.714 |
| Example 2 | Ethyl acetate | 10 | 0.100 | 0.500 | 0.143 | 0.714 |
| Example 3 | Ethyl acetate | 20 | 0.050 | 0.250 | 0.143 | 0.714 |
| Example 4 | Ethyl acetate | 50 | 0.020 | 0.100 | 0.143 | 0.714 |
| Example 5 | Ethyl acetate | 70 | 0.014 | 0.071 | 0.143 | 0.714 |
| Example 6 | Ethyl acetate | 40 | 0.003 | 0.125 | 0.016 | 0.820 |
| Example 7 | Ethyl acetate | 40 | 0.013 | 0.125 | 0.077 | 0.769 |
| Example 8 | Ethyl acetate | 40 | 0.050 | 0.125 | 0.250 | 0.625 |
| Example 9 | Ethyl acetate | 40 | 0.125 | 0.125 | 0.455 | 0.455 |

(continued)

| No. | Electrolyte solution | | | | | |
|---|---|---|---|---|---|---|
| | First solvent | | W1/W4 | W2/W4 | W1/(W1+W2+W3) | W2/(W1+W2+W3) |
| | Substance | Mass content W4/% | | | | |
| Example 10 | Ethyl acetate | 40 | 0.025 | 0.025 | 0.333 | 0.333 |
| Example 11 | Ethyl acetate | 40 | 0.025 | 0.100 | 0.167 | 0.667 |
| Example 12 | Ethyl acetate | 40 | 0.025 | 0.200 | 0.100 | 0.800 |
| Example 13 | Ethyl acetate | 40 | 0.025 | 0.250 | 0.083 | 0.833 |
| Example 14 | Ethyl acetate | 40 | 0.025 | 0.125 | 0.164 | 0.820 |
| Example 15 | Ethyl acetate | 40 | 0.025 | 0.125 | 0.154 | 0.769 |
| Example 16 | Ethyl acetate | 40 | 0.025 | 0.125 | 0.125 | 0.625 |
| Example 17 | Ethyl acetate | 40 | 0.025 | 0.125 | 0.091 | 0.455 |
| Example 18 | Methyl acetate | 40 | 0.025 | 0.125 | 0.143 | 0.714 |
| Example 19 | Propyl acetate | 40 | 0.025 | 0.125 | 0.143 | 0.714 |
| Example 20 | Ethyl acetate | 40 | 0.025 | 0.125 | 0.143 | 0.714 |
| Example 21 | Ethyl acetate | 40 | 0.025 | 0.125 | 0.143 | 0.714 |
| Example 22 | Ethyl acetate | 40 | 0.025 | 0.125 | 0.143 | 0.714 |
| Example 23 | Ethyl acetate | 40 | 0.025 | 0.125 | 0.143 | 0.714 |
| Comparative Example 1 | Ethyl acetate | 40 | / | / | / | / |
| Comparative Example 2 | Ethyl acetate | 40 | / | 0.125 | / | / |
| Comparative Example 3 | Ethyl acetate | 40 | 0.025 | / | / | / |
| Comparative Example 4 | Ethyl acetate | 40 | / | / | / | / |

Table 3 Performance parameters

| No. | Electrolyte solution performance test results | | Battery performance test results | | | |
|---|---|---|---|---|---|---|
| | Electrolyte solution retention coefficient (g/Ah) | Ionic conductivity (mS/cm) | Low-temperature capacity retention rate | Cycle performance (cycle number) | Storage performance (discharge capacity retention rate) | Gas production volume during storage at 60°C (mL) |
| Example 1 | 2.9 | 15.6 | 89.4% | 1122 | 91.2% | 11.2 |
| Example 2 | 2.9 | 14.2 | 87.1% | 1294 | 91.4% | 7.6 |
| Example 3 | 2.9 | 14.7 | 87.9% | 1238 | 91.4% | 8.9 |
| Example 4 | 2.9 | 16.0 | 89.4% | 1092 | 91.2% | 12.8 |
| Example 5 | 2.9 | 16.8 | 89.7% | 478 | 86.5% | 48.6 |
| Example 6 | 2.9 | 15.7 | 89.0% | 817 | 90.8% | 13.2 |
| Example 7 | 2.9 | 15.6 | 89.3% | 1118 | 91.2% | 12.6 |
| Example 8 | 2.9 | 15.5 | 89.4% | 1156 | 91.2% | 9.7 |
| Example 9 | 2.9 | 15.3 | 89.0% | 910 | 90.8% | 18.1 |
| Example 10 | 2.9 | 15.3 | 89.4% | 369 | 88.8% | 32.5 |

(continued)

| No. | Electrolyte solution performance test results | | Battery performance test results | | | |
|---|---|---|---|---|---|---|
| | Electrolyte solution retention coefficient (g/Ah) | Ionic conductivity (mS/cm) | Low-temperature capacity retention rate | Cycle performance (cycle number) | Storage performance (discharge capacity retention rate) | Gas production volume during storage at 60°C (mL) |
| Example 11 | 2.9 | 15.5 | 89.5% | 1089 | 91.2% | 12.1 |
| Example 12 | 2.9 | 15.7 | 89.2% | 1207 | 91.3% | 10.1 |
| Example 13 | 2.9 | 15.8 | 89.0% | 1236 | 91.3% | 8.7 |
| Example 14 | 2.9 | 15.6 | 89.1% | 917 | 90.1% | 16.9 |
| Example 15 | 2.9 | 15.6 | 89.4% | 1103 | 91.1% | 12.2 |
| Example 16 | 2.9 | 15.4 | 89.4% | 1152 | 91.2% | 11.7 |
| Example 17 | 2.9 | 15.3 | 89.2% | 1036 | 90.8% | 11.6 |
| Example 18 | 2.9 | 16.5 | 90.1% | 1012 | 90.9% | 14.4 |
| Example 19 | 2.9 | 14.7 | 89.0% | 1135 | 91.2% | 10.8 |
| Example 20 | 2.9 | 15.6 | 89.3% | 1049 | 91.1% | 13.1 |
| Example 21 | 2.9 | 15.6 | 89.6% | 1043 | 91.0% | 14.1 |
| Example 22 | 2.9 | 15.5 | 89.3% | 1065 | 91.1% | 13.8 |
| Example 23 | 2.9 | 15.6 | 89.3% | 1043 | 91.0% | 13.5 |
| Comparative Example 1 | 2.9 | 15.4 | 68.3% | 87 | 74.1% | Much greater than 100 mL |
| Comparative Example 2 | 2.9 | 15.6 | 81.8% | 326 | 83.4% | 98.5 |
| Comparative Example 3 | 2.9 | 15.5 | 75.2% | 131 | 78.5% | Much greater than 100 mL |
| Comparative Example 4 | 2.9 | 15.5 | 71.7% | 98 | 79.2% | Much greater than 100 mL |

The electrolyte solutions in Examples 1 to 23 all include a first solvent, a first additive, a second additive, and a third additive. The lithium secondary batteries containing such electrolyte solutions all exhibit excellent low-temperature capacity retention rate, storage performance, and cycle performance, and have a low amount of gas production during storage.

The electrolyte solution in Comparative Example 1 does not contain the first additive, the second additive, or the third additive. From the comparison between Examples 1 to 23 and Comparative Example 1, it can be seen that adding the first additive, the second additive, and third additive to the electrolyte solution effectively improves the low-temperature capacity retention rate, storage performance, and cycle performance of the lithium secondary battery, while significantly reducing the gas production volume during storage.

In the electrolyte solutions of Comparative Examples 2 to 4, only any one of the first additive, the second additive, and the third additive was used: in the electrolyte solution of Comparative Example 2, only the second additive was used; in Comparative Example 3, only the first additive was used; and in Comparative Example 4, only the third additive was used.

From the comparison between Comparative Example 1 and Comparative Examples 2 to 4, it can be seen that adding any one of the three additives to the electrolyte solution can improve different performances of the lithium secondary battery to a certain extent: when only the second additive is added (Comparative Example 2), it improves the low-temperature capacity retention rate, storage performance, and cycle performance of the battery, and also reduces the gas production volume during storage to a certain extent; when only the first additive (Comparative Example 3) or only the third additive (Comparative Example 4) is added, it improves the low-temperature capacity retention rate, storage performance, and cycle performance of the battery to a certain extent.

From the comparison between Examples 1 to 18 and Comparative Examples 2 to 4, it can be seen that adding all

three additives to the electrolyte solution simultaneously further improves the low-temperature capacity retention rate, storage performance, and cycle performance of the lithium secondary battery, while significantly reducing the gas production volume during storage.

From Examples 1 to 5, it can be seen that when the mass content W4 of the first solvent (ethyl acetate) is controlled to be 10% to 70%, the lithium secondary battery exhibits excellent low-temperature capacity retention rate, storage performance, and cycle performance, and have a low amount of gas production during storage. When W4 is 70%, due to the high content of the first solvent, the reactivity of the electrolyte solution is too strong, and its ability to improve storage performance, cycle performance, and gas production volume during storage is relatively weak; when W4 is 10%, due to the low content of the first solvent, the gas production volume during storage is low, but the low conductivity weakens its ability to improve the battery's charging capacity. Therefore, when W4 is 20% to 50%, the overall performance of the lithium secondary battery is superior.

From Examples 6 to 9, it can be seen that when the mass content W1 of the first additive (lithium difluorooxalate borate) is controlled to be 0.1% to 5%, the lithium secondary battery can achieve high low-temperature capacity retention rates, storage performance, and cycle performance, and have a low amount of gas production during storage. When W1 is 5%, the content of the first additive is relatively high, and when W1 is 0.1%, the content of the first additive is relatively low. In both cases, the ability to improve cycle performance is relatively weak. Therefore, when W1 ranges from 0.5% to 2%, the overall performance of the lithium secondary battery is superior.

From Examples 10 to 13, it can be seen that when the mass content W2 of the second additive (vinylene carbonate) is controlled between 1% and 10%, the lithium secondary battery can exhibit high low-temperature capacity retention rate, storage performance, and cycle performance, while having a low gas production volume during storage. When W2 is 10%, the content of the second additive is relatively high, resulting in an overly dense SEI film, and its ability to improve the battery's charging capability is relatively weak. When W2 is 1%, the content of the second additive is relatively low, resulting in poor quality of the SEI film. Moreover, since the second additive participates in the film formation during the cycling process, its ability to improve storage performance, cycle performance, and gas production volume during storage is relatively weak. Therefore, when W2 ranges from 4% to 8%, the overall performance of the lithium secondary battery is superior.

From Examples 14 to 17, it can be seen that when the mass content W3 of the third additive (tris(trimethylsilyl) phosphate) is controlled between 0.1% and 5%, the lithium secondary battery can exhibit high low-temperature capacity retention rate, storage performance, and cycle performance, while having a low gas production volume during storage. Since the third additive can increase the thermal stability of the electrolyte solution, when W3 is 0.1%, the content of the third additive is relatively low, and thus its ability to improve cycle performance is relatively weak. When W3 is 5%, the content of the third additive is relatively high, and thus its ability to improve cycle performance also decreases to some extent. Therefore, when W3 ranges from 0.5% to 2%, the overall performance of the lithium secondary battery is superior.

From Examples 1, 18 to 23, it can be seen that using various types of first solvents (such as ethyl acetate, methyl acetate, propyl acetate), or various types of first additives (such as lithium difluorooxalate borate, lithium bis(oxalato) borate), or various types of second additives (such as vinylene carbonate, fluoroethylene carbonate, ethylene sulfate), or various types of third additives (such as tris(trimethylsilyl) phosphate, tris(2,2,2-trifluoroethyl) phosphite) can enable the lithium secondary battery to exhibit excellent low-temperature capacity retention rate, storage performance, and cycle performance, while having a low gas production volume during storage.

A reduction potential of the first additive relative to $Li^+/Li$ is greater than or equal to 1.4 V, for example: lithium difluorooxalate borate is 1.9 V ($Li/Li^+$), lithium bis(oxalato)borate is 1.8 V ($Li/Li^+$), tris(trimethylsilyl) borate is 1.8 V ($Li/Li^+$), and 1,3-propene sultone is 2.6 V ($Li/Li^+$).

A reduction potential of the second additive relative to $Li^+/Li$ is greater than or equal to 1.0 V and less than 1.4 V, for example: vinylene carbonate is 1.0 V ($Li/Li^+$), fluoroethylene carbonate is 1.2 V ($Li/Li^+$), and ethylene sulfate is 1.05 V ($Li/Li^+$).

A reduction potential of the third additive relative to $Li^+/Li$ is less than 1.0 V, for example: tris(2,2,2-trifluoroethyl) phosphite is 0.8 V ($Li/Li^+$), tris(trimethylsilyl) phosphate is 0.8 V ($Li/Li^+$), and tris(trimethylsilyl) borate is 0.7 V ($Li/Li^+$).

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. A lithium secondary battery, comprising an electrolyte solution, the electrolyte solution comprising a first solvent, a first additive, and a second additive, and the first solvent comprising a carboxylic ester compound;

   wherein a reduction potential of the carboxylic ester compound relative to $Li^+/Li$ is less than or equal to 1.4V;
   a reduction potential of the first additive relative to $Li^+/Li$ is greater than or equal to 1.4 V; and
   a reduction potential of the second additive relative to $Li^+/Li$ is greater than or equal to 1.0 V and less than 1.4 V.

2. The lithium secondary battery according to claim 1, wherein the carboxylic ester compound comprises a compound having a structure as shown in formula I,

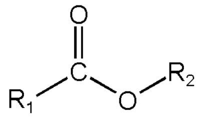 formula I,

   wherein $R_1$ and $R_2$ each independently comprise at least one of a C1-C5 alkyl group and a C1-C5 haloalkyl group.

3. The lithium secondary battery according to claim 1 or 2, wherein the carboxylic ester compound comprises at least one of ethyl acetate, methyl acetate, propyl acetate, and ethyl formate.

4. The lithium secondary battery according to any one of claims 1 to 3, wherein the first additive comprises at least one of a tetrafluoroborate compound, an oxalate borate compound, a borate ester compound, vinyl sulfite vinyl ester, 1,3-propene sultone, and methylene dimethanesulfonate.

5. The lithium secondary battery according to any one of claims 1 to 4, wherein the first additive comprises at least one of lithium difluorooxalate borate, lithium bis(oxalato)borate, tris(trimethylsilyl) borate, and 1,3-propene sultone.

6. The lithium secondary battery according to any one of claims 1 to 5, wherein the second additive comprises at least one of vinylene carbonate, fluoroethylene carbonate, vinyl ethylene carbonate, organic sulfate esters, sulfonate esters, and difluorophosphate.

7. The lithium secondary battery according to any one of claims 1 to 6, wherein the second additive comprises at least one of vinylene carbonate, fluoroethylene carbonate, and ethylene sulfate.

8. The lithium secondary battery according to any one of claims 1 to 7, wherein the electrolyte solution further comprises a third additive, and a reduction potential of the third additive relative to $Li^+/Li$ is less than 1.0 V.

9. The lithium secondary battery according to claim 8, wherein the third additive comprises at least one of an organophosphorus compound, an organofluorine compound, a phosphate ester compound, a borate ester compound, and a sulfonate compound.

10. The lithium secondary battery according to claim 8 or 9, wherein the third additive comprises at least one of tris(2,2,2-trifluoroethyl) phosphite and tris(trimethylsilyl) phosphate.

11. The lithium secondary battery according to any one of claims 1 to 10, wherein the lithium secondary battery satisfies the following conditions:

$$0.003 \leq W1/W4 \leq 0.125;$$

   and/or

$$0.025 \leq W2/W4 \leq 0.5;$$

   wherein W4 is a mass content of the first solvent in the electrolyte solution, with a unit of %; W1 is a mass content of the first additive in the electrolyte solution, with a unit of %; and W2 is a mass content of the second additive in the

electrolyte solution, with a unit of %.

**12.** The lithium secondary battery according to any one of claims 1 to 11, wherein the lithium secondary battery satisfies the following condition:

$$0.3g/Ah \leq (D4+D2)/A \leq 2.3g/Ah;$$

wherein D4 is the mass of the first solvent, with a unit of g; D2 is the mass of the second additive, with a unit of g; and A is a rated capacity of the lithium secondary battery, with a unit of Ah.

**13.** The lithium secondary battery according to any one of claims 1 to 12, wherein the lithium secondary battery satisfies the following condition:

$$0.5g/Ah \leq (D4+D2)/A \leq 2g/Ah;$$

wherein D4 is the mass of the first solvent, with a unit of g; D2 is the mass of the second additive, with a unit of g; and A is a rated capacity of the lithium secondary battery, with a unit of Ah.

**14.** The lithium secondary battery according to any one of claims 8 to 13, wherein the lithium secondary battery satisfies the following conditions:

$$0.016 \leq W1/(W1+W2+W3) \leq 0.455;$$

and/or

$$0.333 \leq W2/(W1+W2+W3) \leq 0.833;$$

wherein W1 is a mass content of the first additive in the electrolyte solution, with a unit of %; W2 is a mass content of the second additive in the electrolyte solution, with a unit of %; and W3 is a mass content of the third additive in the electrolyte solution, with a unit of %.

**15.** The lithium secondary battery according to any one of claims 8 to 14, wherein the lithium secondary battery satisfies the following conditions:

$$10\% \leq W4 \leq 70\%;$$

$$0.1\% \leq W1 \leq 5\%;$$

$$1\% \leq W2 \leq 10\%;$$

and/or

$$0.1\% \leq W3 \leq 5\%;$$

wherein W4 is a mass content of the first solvent in the electrolyte solution, with a unit of %; W1 is a mass content of the first additive in the electrolyte solution, with a unit of %; W2 is a mass content of the second additive in the electrolyte solution, with a unit of %; and W3 is a mass content of the third additive in the electrolyte solution, with a unit of %.

**16.** The lithium secondary battery according to any one of claims 8 to 15, wherein the lithium secondary battery satisfies the following conditions:

$$20\% \leq W4 \leq 50\%;$$

$$0.5\% \leq W1 \leq 2\%;$$

$$4\% \leq W2 \leq 8\%;$$

and/or

$$0.5\% \leq W3 \leq 2\%;$$

wherein W4 is a mass content of the first solvent in the electrolyte solution, with a unit of %; W1 is a mass content of the first additive in the electrolyte solution, with a unit of %; W2 is a mass content of the second additive in the electrolyte solution, with a unit of %; and W3 is a mass content of the third additive in the electrolyte solution, with a unit of %.

**17.** The lithium secondary battery according to any one of claims 1 to 16, wherein the electrolyte solution further comprises a second solvent, and the second solvent comprises at least one of a cyclic carbonate compound and a linear carbonate compound;

the cyclic carbonate compound comprises at least one of ethylene carbonate, propylene carbonate, and butylene carbonate; and
the linear carbonate compound comprises at least one of dimethyl carbonate, ethyl methyl carbonate, and diethyl carbonate.

**18.** The lithium secondary battery according to claim 17, wherein based on a total mass of the electrolyte solution, a mass content of the second solvent is ≥30%.

**19.** The lithium secondary battery according to claim 17 or 18, wherein based on the total mass of the electrolyte solution, a mass content of the second solvent is 30% to 85%.

**20.** The lithium secondary battery according to any one of claims 1 to 19, wherein the lithium secondary battery satisfies the following conditions:

$$14.2\ \text{mS/cm} \leq S \leq 16.8\ \text{mS/cm};$$

wherein S is an ionic conductivity of the electrolyte solution at 25°C, with a unit of mS/cm.

**21.** The lithium secondary battery according to any one of claims 1 to 20, further comprising a positive electrode sheet and a negative electrode sheet,

wherein the positive electrode sheet comprises a positive electrode current collector and a positive electrode material layer located on at least one side of the positive electrode current collector, the positive electrode material layer comprises a lithium-containing phosphate with an olivine structure, and the lithium-containing phosphate comprises a compound represented by the general formula shown in formula II,

$LiFe_{1-x-y}Mn_xM_yPO_4$, formula II,

wherein $0 \leq x \leq 1$, $0 \leq y < 1$, and M comprises at least one of V, Nb, Ti, Co, Ni, Sc, Ge, Mg, Al, Zr, Hf, Ta, Mo, W, Ru, Ag, Sn, and Pb.

**22.** The lithium secondary battery according to any one of claims 1 to 21, wherein the negative electrode sheet comprises a negative electrode current collector and a negative electrode material layer located on at least one side of the negative electrode current collector, and the negative electrode material layer comprises at least one of artificial graphite, natural graphite, soft carbon, hard carbon, mesophase microbead carbon, a silicon-based material, and a tin-based material.

**23.** The lithium secondary battery according to claim 21 or 22, wherein a compact density of the positive electrode sheet is from 2.4 g/cm$^3$ to 2.75 g/cm$^3$, a compact density of the negative electrode sheet is from 1.5 g/cm$^3$ to 1.85 g/cm$^3$, and a

porosity of the negative electrode sheet is from 20% to 50%.

**24.** An electrical apparatus, comprising the lithium secondary battery according to any one of claims 1 to 23.

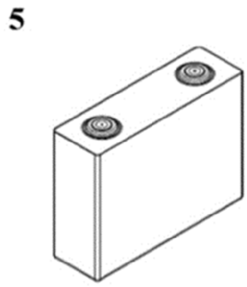


FIG. 1

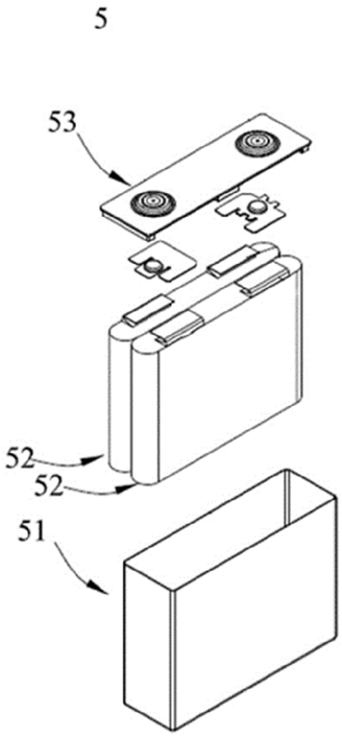


FIG. 2

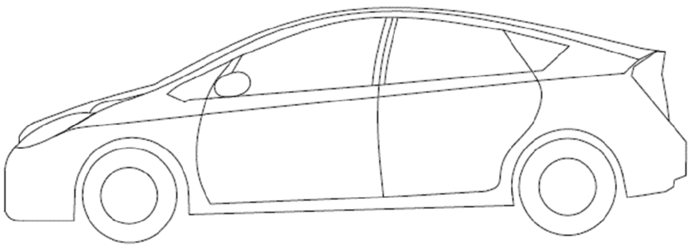

FIG. 3

**INTERNATIONAL SEARCH REPORT**

International application No.
**PCT/CN2024/110988**

**A. CLASSIFICATION OF SUBJECT MATTER**

H01M10/0567(2010.01)i; H01M10/0569(2010.01)i; H01M10/058(2010.01)i; H01M10/052(2010.01)i

According to International Patent Classification (IPC) or to both national classification and IPC

**B. FIELDS SEARCHED**

Minimum documentation searched (classification system followed by classification symbols)

IPC: H01M10/-

Documentation searched other than minimum documentation to the extent that such documents are included in the fields searched

Electronic data base consulted during the international search (name of data base and, where practicable, search terms used)

CNTXT, ENTXT, CNKI, ISI, DWPI: 电解液, 还原电位, 羧酸酯, 乙酸甲酯, 乙酸乙酯, 二氟草酸硼酸锂, 碳酸亚乙烯酯, 氟代碳酸乙烯酯, 磷酸酯, electrolyte, reduction potential, carboxylic ester, acetate, borate, vinylene carbonate, fluoroethylene carbonate, phosphate

**C. DOCUMENTS CONSIDERED TO BE RELEVANT**

| Category* | Citation of document, with indication, where appropriate, of the relevant passages | Relevant to claim No. |
|---|---|---|
| PX | CN 117393858 A (NINGDE CONTEMPORARY AMPEREX TECHNOLOGY CO., LTD.) 12 January 2024 (2024-01-12)<br>claims 1-24 | 1-24 |
| X | CN 116231091 A (NINGDE CONTEMPORARY AMPEREX TECHNOLOGY CO., LTD.) 06 June 2023 (2023-06-06)<br>description, paragraph 0079, embodiment 12 and 13, and table 1 | 1-7, 11-13, 17-24 |
| Y | CN 116231091 A (NINGDE CONTEMPORARY AMPEREX TECHNOLOGY CO., LTD.) 06 June 2023 (2023-06-06)<br>description, paragraph 0079, embodiment 12 and 13, and table 1 | 8-24 |
| Y | CN 112768773 A (SVOLT ENERGY TECHNOLOGY CO., LTD.) 07 May 2021 (2021-05-07)<br>description, paragraphs 0005-0011 and 0031 | 8-24 |
| A | CN 106328998 A (DONGGUAN SHANSHAN BATTERY MATERIALS CO., LTD.) 11 January 2017 (2017-01-11)<br>description, paragraphs 0007-0115 | 1-24 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 October 2024** | **22 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2024/110988**

**C. DOCUMENTS CONSIDERED TO BE RELEVANT**

| Category* | Citation of document, with indication, where appropriate, of the relevant passages | Relevant to claim No. |
|---|---|---|
| A | CN 110085914 A (DONGGUAN WEIKE BATTERY CO., LTD.) 02 August 2019 (2019-08-02)<br>claims 1-10 | 1-24 |
| A | JP 2011181204 A (FURUKAWA BATTERY CO., LTD.) 15 September 2011 (2011-09-15)<br>description, paragraphs 0012-0069 | 1-24 |

Form PCT/ISA/210 (second sheet) (July 2022)

**INTERNATIONAL SEARCH REPORT**
**Information on patent family members**

International application No.
**PCT/CN2024/110988**

| Patent document cited in search report | | | Publication date (day/month/year) | Patent family member(s) | | | Publication date (day/month/year) |
|---|---|---|---|---|---|---|---|
| CN | 117393858 | A | 12 January 2024 | None | | | |
| CN | 116231091 | A | 06 June 2023 | CN | 116231091 | B | 29 August 2023 |
| CN | 112768773 | A | 07 May 2021 | None | | | |
| CN | 106328998 | A | 11 January 2017 | None | | | |
| CN | 110085914 | A | 02 August 2019 | None | | | |
| JP | 2011181204 | A | 15 September 2011 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311680333